# EUROPÄISCHE PATENTSCHRIFT

(11) **EP 0 604 431 B1**
(45) Veröffentlichungstag und Bekanntmachung des Hinweises auf die Patenterteilung: **17.05.1995**
(21) Anmeldenummer: 92913509.3
(22) Anmeldetag: 30.06.1992
(51) Int. Cl.: G06F 9/44, G06F 9/46

(54) **VERFAHREN ZUR ADAPTION EINER OBJEKTORIENTIERTEN APPLIKATION**
PROCESS FOR ADAPTING AN OBJECT-ORIENTED APPLICATION
PROCEDE POUR L'ADAPTATION D'UNE APPLICATION ORIENTEE OBJET

(30) Priorität: 20.09.1991 DE 4131380
(43) Veröffentlichungstag der Anmeldung: 06.07.1994
(73) Patentinhaber: SIEMENS AKTIENGESELLSCHAFT, 80333 München (DE)
(72) Erfinder: MEYER, Walter, D-80331 München (DE); ROTHE, Oliver, D-80337 München (DE); KNEISSL, Franz, D-90427 Nürnberg (DE); HUBMANN, Hans-Jürgen, D-91077 Neunkirchen (DE); BESS, Rüdiger, D-90763 Fürth (DE)
(86) Internationale Anmeldenummer: DE9200538
(87) Internationale Veröffentlichungsnummer: WO9306548

(56) Entgegenhaltungen:
- 9TH INTERNATIONAL CONFERENCE ON DISTRIBUTED COMPUTING SYSTEMS, 5.- 9. Juni1989, NEWPORT BEACH, CA, US Seiten 550 - 559 A. P. BLACK ET AL. 'Implementing Location Independent Invocation'
- IEEE SOFTWARE Bd. 2, Nr. 3, Mai 1985, NEW YORK, US Seiten 9 - 19 N. GAMMAGE ET AL. 'XMS: A Rendezvous-Based Distributed System Software Architecture
- ACM TRANSACTIONS ON COMPUTER SYSTEMS Bd. 2, Nr. 1, Februar 1984, NEW YORK, US pages 39 - 59 A. D. BIRRELL ET AL. 'Implementing Remote Procedure Calls'

## Beschreibung

### Verfahren zur Verteilung einer objektorientierten Applikation, die in einer Programmiersprache geschrieben ist, deren Nachrichtenmechanismus so ausgelegt ist, daß nur die Adressierung von Objekten innerhalb eines Betriebssystems unterstützt wird auf lokal und entfernt lad- und ausführbare Betriebssystemprozesse

Die Erfindung betrifft ein Verfahren zur Adaption einer objektorientierten Applikation, so daß diese auf mehrere Betriebssystemprozesse verteilbar ist.

Objektorientierte Applikationen sind mittels einer objektorientierten Programmierung realisierbar. Ein objektorientiertes System besteht nicht nur aus Funktionen oder Prozeduren, welche einander aufrufen, etwa bei einer Programmierung mit den Programmiersprachen Fortran, Pascal, C, sondern es sind auch Objekte vorgesehen, die durch den Austausch von Nachrichten miteinander kommunizieren. Ein Beispiel für eine objektorientierte Programmiersprache ist die Programmiersprache C++, welche durch eine Erweiterung der weit verbreiteten Programmiersprache C entstanden ist. In der Programmiersprache C++ werden Klassen von Objekten durch Typdefinitionen vereinbart. Die Objekte gelten als Variablen eines Klassentyps und werden als Instanzen, der Klasse bezeichnet. Jedes Objekt hat Instanzvariable als einen Satz von Daten. Auf die Instanzvariablen kann nur mittels bestimmter Funktionen zugegriffen werden, die in der jeweiligen Klassendefinition festgelegt werden. Diese der Klasse zugeordneten Zugriffsfunktionen heißen Methoden der Klasse. In der Programmiersprache C++ ist das Senden einer Nachricht an ein Objekt gleichbedeutend mit dem Aufruf einer Methode für dieses Objket. Die Programmiersprache C++ unterstützt die Vererbung von Klassen. Die Instanzvariablen und die Methoden einer Klasse können von einer abgeleiteten Klasse durch Vererbung übernommen werden. Es können Methoden der Basisklasse mit dem Schlüsselwort virtual deklariert werden, sodaß diese Methoden in einer abgeleiteten KLasse redefinierbar sind. Objekte sind durch Zeiger referenzierbar, sowie dynamisch erzeugbar, sodaß erst zur Laufzeit entscheidbar ist, welche Implementierung einer Methode tatsächlich ausgeführt wird. In der Programmiersprache C++ sind Applikationen auf genau einen Prozeß im Sinne des Betriebssystems begrenzt. Bei einer realen Anwendung kann es zu Problemen führen, wenn die Applikation eine bestimmte Größe überschreitet, da Betriebssystemprozesse nur eine begrenzte Größe annehmen können. Somit ist ohne zusätzliche Maßnahmen auch die Größe einer C++ Applikatation begrenzt. Aus einigen Anwendungsbereichen, insbesondere der Automatisierungstechnik sowie der Telekommunikation, bestehen Anforderungen, welche eine Aufteilung der Applikation auf mehrere unabhängige, getrennt ausführbare und ladbare Betriebssystemprozesse verlangen. Eine derartige Aufteilung auf mehrere Betriebssystemprozesse, also keine light-weight Prozesse, ist mit den Sprachmitteln von C++ alleine nicht formulierbar. Eine derartige Aufteilung einer Applikation auf mehrere Betriebssystemprozesse bedingt eine wesentliche Erweiterung der Funktionalität, indem Mechanismen des Betriebssystems genutzt werden sollen, die die Kommunikation zwischen den Betriebssystemprozessen herstellen. Es ist denkbar, daß explizit vom Programmierer in die Applikation Aufrufe für eine Interprozeßkommunikation (IPC) eingefügt werden, sowie daß eigene IPC-Klassen verwendet werden. Der Softwareersteller hat in diesem Fall die Programmierung der IPC-Mechanismen selbst vorzunehmen. Die Aufteilung der Applikation auf die einzelnen Betriebssystemprozesse ist fest im Sourceprogramm eincodiert. Bei einer erforderlichen Änderung der Prozeßaufteilung sind vom Programmierer die Sourceprogamme zu modifizieren und erneut zu compilieren.

Aus der Druckschrift "Implementing Remote Procedure Calls"von A.D. Birrel et al in den "ACM Transactions on Computer Systems Bd. 2, Febr. 1984 New York, USA Seiten 39 - 59", ist ein Kommunikationsverfahren bekannt, welches es ermöglicht in einer Hochsprache geschriebene Programme innerhalb eines Netzwerkes kommunizieren zu lassen. Dies geschieht hierbei durch die Implementierung von Remote Procedure Calls (RPC) welche sich eines Stub-Konzepts bedienen.

An einem Remote Aufruf sind hierbei Fünf Software-Teile beteiligt:
Der User, der User-Stub, das RPC Kommunikationspaket, der Server-Stub und der Server. Der User, der User-Stub und ein Teil des Kommunikationspakets werden auf der rufenden Maschine ausgeführt; der Server, der Server-Stub und ein anderer Teil des Kommunikationspakets werden auf der angerufenen Maschine ausgeführt. Falls der User einen Remoteaufruf durchführen will, so geschieht dieser in derselben Weise wie ein normaler Aufruf, nur daß der dabei eine korrespondierende Prozedur im User-Stub aufruft. Dieser User-Stub ist dafür verantwortlich, eine Zielprozedur für den Aufruf zu bestimmen und die Argumente in einem oder mehreren Paketen zu verpacken und diese sicher an die aufgerufene Maschine zu versenden. Auf dieser aufgerufenen Maschine wird die Information dann vom Server-Stub ausgepackt und dieser ruft in einem ganz normalen Aufruf eine entsprechende Prozedur im Server auf. Wenn dieser Aufruf im Server abgearbeitet ist, so übergibt der Server-Stub die Ergebnisse zurück an den ausgesetzten Prozeß in der aufrufenden Maschine. Dort werden die Ergebnisse ausgepackt und der User-Stub gibt sie zurück an den User. Das Kommunikationspaket ist dabei verantwortlich für die Rückübertragung, die Bestätigungen, das Paketrouting und die Verschlüsselung.

In dieser Druckschrift wird ein Kommunikationsverfahren vorgestellt, daß dem Programmierer den Aufwand des Programmierens von detailierten kommunikationsspezifischen Softwarecode abnimmt. Es ist jedoch nach wie vor ein Compilieren und ein Binden des Codes nach der Spezifikation der Systemumgebung erforderlich. Das Problem der Verteilung von Objekten einer objektorientierten Applikation in Verbindung mit einer veränderlichen Systemumgebung wird dort nicht angesprochen.

Es ist Aufgabe der Erfindung, ein Verfahren anzugeben, zur Adaption einer objektorientierten Applikation, welche auf mehrere Betriebssystemprozesse verteilbar ist, sodaß insbesondere der Programmierer die zu compilierenden Sourcen der Applikation nicht selbst modifizieren muß.

Diese Aufgabe ist gelöst durch ein Verfahren zur Verteilung zur einer objektorientierten Applikation gemäß dem Anspruch 1.

Ausführbar ist ein bevorzugtes Verfahren mit zumindest einem von folgenden Verfahrensschritten des Aufbereitungsverfahrens:
d) es wird eine Klassendeklaration der Sourcen analysiert für eine Vergabe von Methoden-Identifikationen, sodaß Methoden von verwendeten Klassen der Applikation eindeutig mittels der Methoden-Identifikation identifizierbar sind,
e) es werden die Klassen der Applikation mit einer generischen Methode ergänzt, mittels welcher jene Methode beim Ablauf lokal aufrufbar ist, welche durch einen Parameter der generischen Methode in Form der Methoden-Identifikation identifiziert wird,
f) es werden Basisklassen der Applikation um eine redifinierbar deklarierte Stub-Methode ergänzt,
g) es wird jeder von bei einem Ablauf vorgesehenen Aufrufen von einer Methode für ein Objekt der Klassen ersetzt durch einen beim Ablauf vorgesehenen Aufruf der StubMethode für das Objekt,
   - sodaß bei einem positiven Ergebnis des Aufrufs der StubMethode für das Objekt beim Ablauf ein Aufruf vorgesehen ist zu einem prozeßübergreifenden Versenden von einer Nachricht, durch welche in einem Remote-Prozeß der Aufruf der Methode des Objektes veranlaßt wird, indem die Methoden-Identifikation in der Nachricht enthalten ist,
   - sowie daß bei einem negativen Ergebnis des Aufrufs der Stub-Methode für das Objekt beim Ablauf im Lokal-Prozeß der Aufruf der Methode des Objektes erfolgt,
h) es werden Hilfsdefinitionen für Methoden generiert, sodaß zu jeder Methode der Applikation zumindest
   - ihr Klassenname,
   - ihr Methodenname,
   - ihre Parametertypen,
   - ihr Parameterstring für ein Einpacken sowie Auspacken von Parametern, sowie
   - ihre Methoden-Identifikation definiert sind.

   Ausführbar ist ein weiteres bevorzugtes Verfahren mit zumindest einem von folgenden Verfahrensschritten des Konfigurationsverfahrens:
k) es wird eine bestimmte Systemkonfiguration der Applikation analysiert für eine Verteilung der Objekte als die Instanzen der Applikation auf die Betriebssystemprozesse der Applikation,
m) es wird eine generische Instanzierungsfunktion generiert, mittels welcher beim Ablauf ein neues Objekt der Applikation instanzierbar ist,
   - mit einer lokalen Instanzierung im Lokal-Prozeß bei einem gemäß der Systemkonfiguration lokal zu instanzierenden Objekt, sodaß das negative Ergebnis beim Aufruf der Stub-Methode im Lokal-Prozeß für dieses lokal-instanzierte Objekt vorgesehen ist,
   - sowie mit einer remoten Instanzierung bei einem gemäß der Systemkonfiguration remote zu instanzierenden Objekt, indem im Lokal-Prozeß ein prozeßübergreifender Anstoß vorgesehen ist zur Instanzierung dieses remote zu instanzierenden Objektes im Remote-Prozeß, sowie mit einer lokalen Instanzierung für ein zu diesem Objekt vorgesehenes lokales Stub-Objekt, dessen Stub-Methode im Lokal-Prozeß redefiniert wird, sodaß das positive Ergebnis beim Aufruf der Stub-Methode für dieses als Stub-Objekt lokal instanzierte Objekt im Lokal-Prozeß vorgesehen ist,
n) es wird eine generische Löschfunktion generiert, mittels welcher beim Ablauf die Instanzierung von einem der Objekte der Applikation löschbar ist,
   - mit einem lokalen Löschen im Lokal-Prozeß bei einem gemäß der Systemkonfiguration lokal-instanzierten Objekt,
   - sowie mit einem remoten Löschen bei einem gemäß der Systemkonfiguration remote instanzierten Objekt, indem im Lokal-Prozeß ein prozeßübergreifender Anstoß vorgesehen ist zum Löschen dieses remote-instanzierten Objektes im Remote-Frozeß, sowie ein lokales Löschen von dem zu diesem Objekt vorgesehenen lokalen Stub-Objekt,
p) es werden Runfiles erzeugt, indem zu den Modulen bei jeder ladbaren Einheit Module
   - für die Instanzierungsfunktion,
   - für die Löschfunktion, sowie
   - für die Hilfsdefinitionen für die Methoden der Applikation dazugebunden werden.

   Ausführbar ist ein weiteres bevorzugtes Verfahren mit zumindest einem von folgenden Verfahrensschritten des Kommunikationsverfahrens:
r) es wird die Stub-Methode für eines der Objekte lokal aufgerufen, sowie im Falle des negativen Ergebnisses erfolgt ein lokaler Methodenaufruf für das Objekt,
s) es wird im Falle des positiven Ergebnisses für den lokalen Aufruf der Stub-Methode für das Objekt, aus den gebundenen Hilfsdefinitionen
   - die Methoden-Identifikation,
   - das remote-instanzierte Objekt, sowie
   - Methodenparameter ermittelt,
t) es wird anhand des Parameterstrings eine Nachricht verpackt im Lokal-Prozeß,
u) es wird die Nachricht im Remote-Prozeß empfangen,
v) es wird im Remote-Prozeß nach dem Auspacken der Parameter das lokal instanzierte Objekt ermittelt,
w) es wird mittels der generischen Methode anhand der Methoden-Identifikation der Aufruf der dadurch identifizierten Methode ausgeführt.

Der Erfindung liegt die Idee zugrunde, daß die zu compilierenden Sourcen der Applikation in einem Aufbereitungsverfahren insbesondere mittels eines Präprozessors modifizierbar sind, sodaß durch Codesubstitution Methodenaufrufe ersetzbar sind durch Codesequenzen, mittels derer beim Ablauf entscheidbar ist, ob ein prozeßübergreifendes Versenden einer Nachricht erforderlich ist, oder ob ein lokaler Aufruf erfolgen soll. Dies ist realisierbar, indem Hilfsdefinitionen für die Methoden generiert werden, sodaß durch den Einsatz dieser speziellen Dateien eine Sicherung der Konsistenz des Systems bei der Applikation gewährleistet ist. Dies ist weiters erzielbar, indem ein Stub-Konzept angewendet wird, bei welchem Stub-Methoden und Stub-Objekte verwendet werden. Weiters ist dies erzielbar, indem eine Instanzierungsfunktion sowie eine Löschfunktion in einem Runtime-System eingeetzt wird. Dies ist weiters erzielbar, indem bei einem prozeßübergreifenden Kommunikationsverfahren beim Ablauf insbesondere eine generische Methode eingesetzt wird, von welcher anhand einer Methoden -Identifikation der dadurch identifizierte Methodenaufruf ausführbar ist.

In einer vorteilhaften Weise braucht der Programmierer die Sourcen nicht selbst modifizieren.

In einer vorteilhaften Weise kann der Programmierer die Sourcen der Applikation beispielsweise mit den Sprachmitteln der Programmiersprache C++ erstellen.

In einer vorteilhaften Weise ist mittels der Codesubstitution beim Aufbereitungsverfahren nur eine einmalige Modifikation der Sourcen mit deren anschließender Compilierung ausreichend. Bei einer Änderung der Systemkonfiguration, also bei einer Änderung der Verteilung der Applikation auf mehrere Betriebssystemprozesse, ist eine Änderung der Sourcen der Applikation nicht erforderlich, sodaß auch eine neue Compilierung nicht erforderlich ist.

In einer vorteilhaften Weise wird mittels der Hilfsdefinitionen für eine bestimmte Systemkonfiguration die Konsistenz des Gesamtsystems der objektorientierten Applikation sichergestellt.

Die Erfindung wird anhand der Figuren, in welchen Ausführungsbeispiele enthalten sind, näher erläutert.

Die Figur 1 zeigt ein erfindungsgemäßes Verfahren zur Adaption einer objektorientierten Applikation, welche auf mehrere Betriebssystemprozesse verteilbar ist.

Die Figur 2 zeigt ein anderes Verfahren zur Adaption einer objektorientierten Applikation, welche auf mehrere Betriebsprozesse verteilbar ist.

Die Figur 3 zeigt ein Aufbereitungsverfahren für das erfindungsgemäße Verfahren zur Adaption einer objektorientierten Applikation, welche auf mehrere Betriebssystemprozesse verteilbar ist.

Die Figur 4 zeigt ein Konfigurationsverfahren für cas erfindungsgemäße Verfahren zur Adaption einer objektorientierten Applikation, welche auf mehrere Betriebssystemprozesse verteilbar ist.

Die Figur 5 zeigt ein prozeßübergreifenoes Kommunikationsverfahren für das erfindungsgemäße Verfahren zur Adaption einer objektorientierten Applikation, welche auf mehrere Betriebssystemprozesse verteilbar ist.

Die Figur 6 zeigt einen Methodenaufruf.

Die Figur 7 zeigt eine Codesequenz nach einer Codesubstitution des Methodenaufrufs.

Die Figur 8 zeigt einen prozeßübergreifenden Sendeaufruf für eine Nachricht als einen Teil der Codesequenz.

Die Figur 9 zeigt einen Aufruf einer Stub-Methode als ein Teil der Codesequenz.

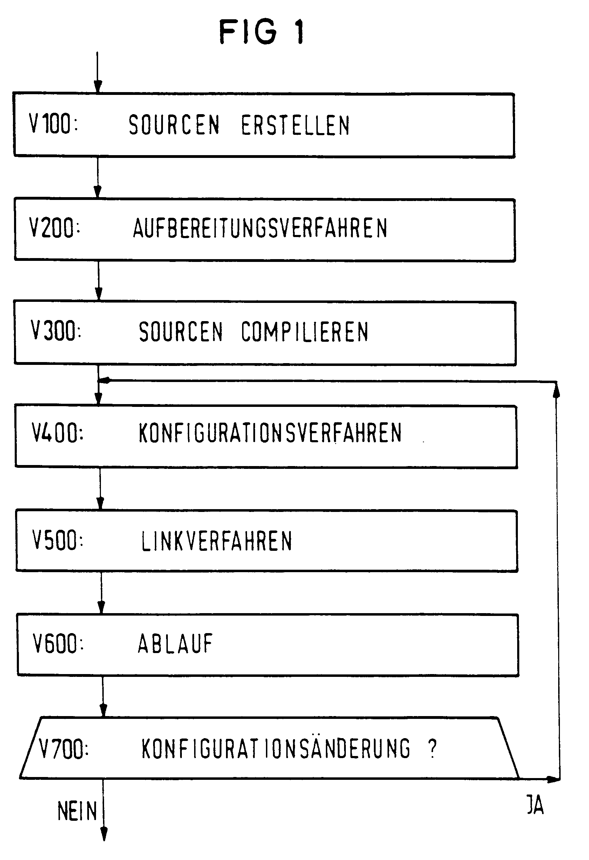

Wie die Figur 1 zeigt, besteht ein Ausführungsbeispiel für das erfindungsgemäße Verfahren zur Adaption einer objektorientierten Applikation, welche auf mehrere Betriebssystemprozesse verteilbar ist, aus den Verfahrensschritten V100, V200, V300, V400, V500, V600, sowie V700.

Es wird der Verfahrensschritt V100 ausgeführt. Vom Programmierer werden die zu compilierenden Sourden der Applikation erstellt.

Es wird der Verfahrensschritt V200 ausgeführt. Für die zu compilierenden erstellten Sourcen der Applikation wird ein Aufbereitungsverfahren durchgeführt. Dabei kann ein Präprozessor vorgesehen sein zur Durchführung des Aufbereitungsverfahrens. Es werden Klassendeklarationen der Sourcen der Applikation analysiert. Es werden Methoden-Identifikationen aufbereitet. Die Klassen der Applikation werden um die generische Methode ergänzt. Es werden die Methodenaufrufe in den Sourcen der Applikation modifiziert, indem mittels Codesubstution Codesequenzen eingesetzt werden anstelle der Methodenaufrufe. Es werden Hilfsdefinitionen für die Methoden der Applikation generiert.

Es wird der Verfahrensschritt V300 ausgeführt. Die vom Aufbereitungsverfahren modifizierten Sourcen werden compiliert.

Es folgt der Verfahrensschritt V400. Es wird ein Konfigurationsverfahren ausgeführt. Es wird eine Konfigurationsdatei analysiert. Es wird eine Instanzierungsfunktion generiert. Es wird eine Löschfunktion generiert. Es werden Hilfsdefinitionen für die Methoden der Applikation mitgebunden. Es werden Runfiles erzeugt.

Es folgt der Verfahrensschritt V500. Es wird ein Linkverfahren ausgeführt. Es werden ablauffähige Phasen der Betriebssystemprozesse gebunden.

Es folgt der Verfahrensschritt V600. Es wird ein Ablauf der Betriebssystemprozesse der Applikation ausgeführt.

Es folgt der Verfahrensschritt V700. Es wird untersucht, ob eine Konfigurationsänderung erforderlich ist. Falls dies der Fall ist, folgt der Verfahrensschritt V400. Gemäß der geänderten Systemkonfiguration wird das Konfigurationsverfahren erneut durchgeführt. Danach folgt der Verfahrensschritt V500, bei welchem das Linkverfahren erneut durchgeführt wird. Danach folgt der Verfahrensschritt V600, bei welchem der Ablauf der Applikation gemäß der geänderten Systemkonfiguration erfolgt.

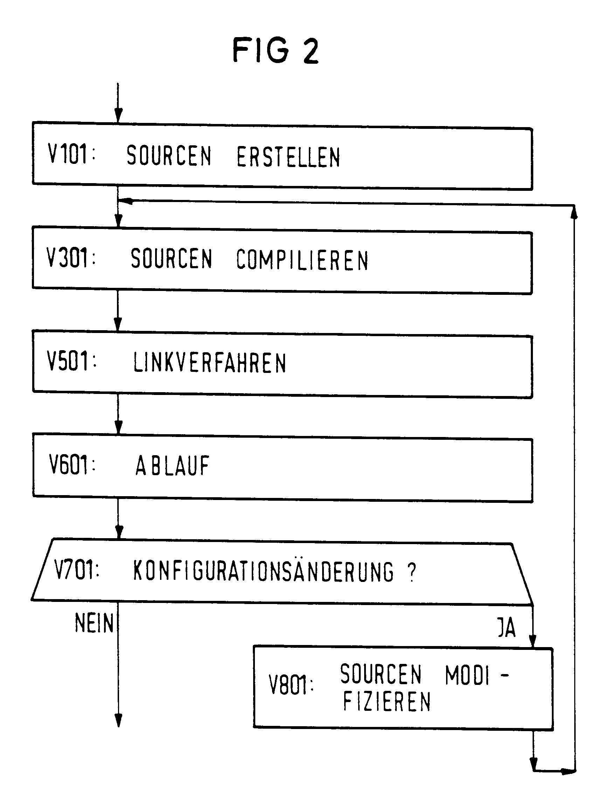

Wie die Figur 2 zeigt, besteht ein Ausführungsbeispiel für ein anderes Verfahren zur Adaption einer objektorientierten Applikation aus den Verfahrensschritten V101, V301, V501, V601, V701, sowie V801.

Es wird der Verfahrensschritt V101 ausgeführt. Von einem Programmierer werden die Sourcen der Applikation erstellt. Je nach Aufteilung der Applikation auf mehrere Betriebssystemprozesse werden vom Programmierer explizit die Aufrufe für eine prozeßübergreifende Kommunikation in den Sourcen der Applikation eingetragen.

Es folgt der Verfahrensschritt V301. Die vom Programmierer erstellten Sourcen werden compiliert.

Es folgt der Verfahrensschritt V501. Für die compilierten Sourcen der Applikation wird das Linkverfahren durchgeführt.

Es folgt der Verfahrensschritt V601. Es erfolgt der Ablauf der Applikation.

Es folgt der Verfahrensschritt V701. Es wird geprüft, ob eine Konfigurationsänderung erforderlich ist. Falls dies der Fall ist, folgt der Verfahrensschritt V801. Gemäß einer neuen Systemkonfiguration werden vom Programmierer die Sourcen der Applikation modifiziert, indem gemäß der neuen Verteilung der Applikation auf einzelne Betriebssystemprozesse in den Sourcen explizit Aufrufe für eine prozeßübergreifende Kommunikation eingefügt werden. Danach folgt erneut der Verfahrensschritt V301, bei welchem die soeben modifizierte Sourcen compiliert werden.

Danach folgt der Verfahrensschritt V501, bei welchem das Linkverfahren erneut durchgeführt wird.

Danach folgt der Verfahrensschritt V601, bei welchem der Ablauf der Applikation gemäß der neuen Systemkonfiguration erfolgt.

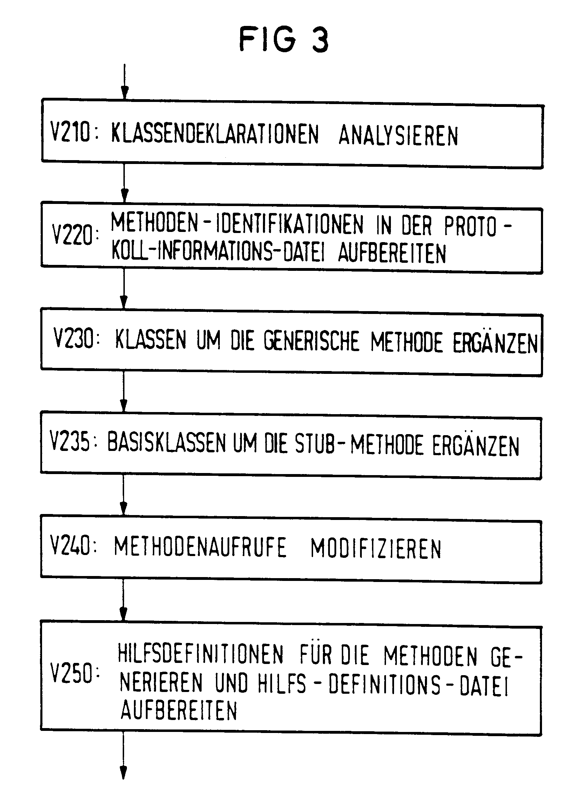

Wie die Figur 3 zeigt, besteht ein Ausführungsbeispiel für das Aufbereitungsverfahren des Verfahrensschrittes V200 aus den Verfahrensschritten V210, V220, V230, V235, V240, sowie V250.

Es wird der Verfahrensschritt V210 ausgeführt. Es wird eine Klassendeklaration der Sourcen der Applikation analysiert für eine Vergabe von Methoden-Identifikationen, sodaß die Methoden von den verwendeten Klassen der Applikation systemweit eindeutig mittels der Methoden-Idenifikation identifizierbar sind.

Es folgt der Verfahrensschritt V220. Es wird eine Protokoll-Informations-Datei aufbereitet, in welcher Hilfsdefinitionen für die Methoden der Applikation enthalten sind, sodaß zu jeder Methode der Applikation zumindest ihr Klassenname, ihr Methodenname, ihre Parametertypen, ihr Parameterstring für ein Einpacken sowie Auspacken von Parametern, sowie ihre Methoden-Identifikation definiert sind.

Es folgt der Verfahrensschritt V230. Es werden die Klassen der Applikation um die generische Methode ergänzt. Mittels der generischen Methode ist anhand der Methoden-Identifikation ein Aufruf der dadurch identifizierten Methode ausführbar.

Es folgt der Verfahrensschritt V235. Es werden die Basisklassen der Applikation um eine redefinierbar deklarierte Stub-Methode ergänzt.

Es folgt der Verfahrensschritt V240. Es werden in den Sourcen die Methodenaufrufe modifiziert mittels einer Codesubstitution.

Es folgt der Verfahrensschritt V250. In einer Hilfsdefinitionsdatei werden die Hilfsoefinitionen für die Methoden generiert und aufbereitet.

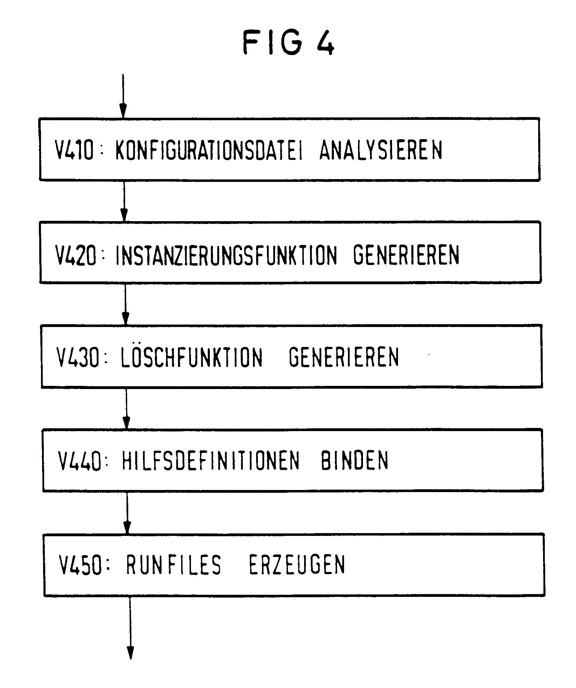

Wie die Figur 4 zeigt, besteht ein Ausführungsbeispiel für das Konfigurationsverfahren des Verfahrensschrittes V400 aus den Verfahrensschritten V410, V420, V430, V440, sowie V450.

Es wird der Verfahrensschritt V410 ausgeführt. Es wird eine bestimmte Systemkonfiguration der Applikation anhand einer Konfigurationsdatei analysiert, mittels welcher eine Verteilung der Objekte der Applikation auf die Betriebssystemprozesse der Applikation vorgenommen wird.

Es folgt der Verfahrensschritt V420. Es wird eine generische Instanzierungsfunktion generiert, mittels welcher beim Ablauf die Objekte der Applikation instanzierbar sind.

Es folgt der Verfahrensschritt V430. Es wird eine generische Löschfunktion generiert, mittels welcher beim Ablauf die Instanzierung der Objkete der Applikation löschbar ist.

Es folgt der Verfahrensschritt V440. Es werden Module für die Hilfsdefinitionen für die Methoden der Applikation gebunden.

Es folgt der Verfahrensschritt V450. Es werden Runfiles erzeugt, indem zu den Modulen bei jeder ladbaren Einheit Module für die Instanzierungsfunktion, für die Löschfunktion, sowie für die Hilfsdefinitionen für die Methoden der Applikation dazugebunden werden.

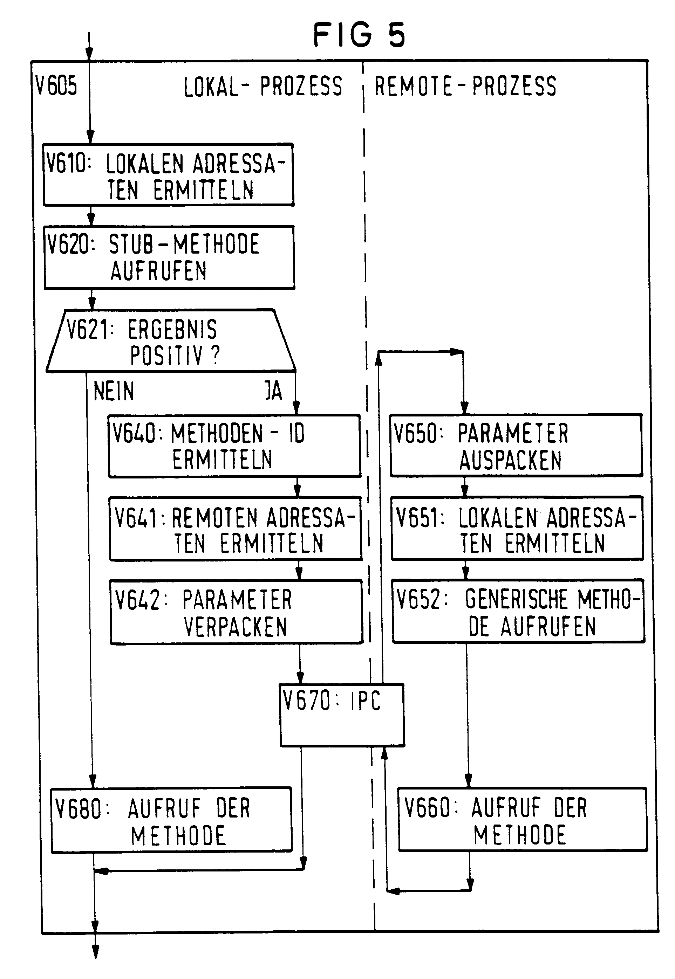

Wie die Figur 5 zeigt, besteht als ein Teil des Verfahrensschrittes V600 ein Ausführungsbeispiel von einem Verfahrensschritt V605 für einen Ablauf zum Aufrufen einer Methode für ein Objket der Applikation aus den Verfahrensschritten V610 bis V680.

In einem Lokal-Prozeß wird der Verfahrensschritt V610 ausgeführt. Es wird ein lokaler Adressat ermittelt. Dieser ist im Falle eines lokalen Objektes die Instanz selbst. Im Falle eines remoten Objektes ist der lokale Adressat das zugehörige Stub-Objekt.

Es folgt der Verfahrensschritt V620. Es wird für den lokalen Adressaten die Stub-Methode aufgerufen.

Es folgt der Verfahrensschritt V621. Es wird überprüft, ob das Ergebnis beim Aufruf der Stub-Methode für den lokalen Adressaten positiv ist.

Falls das Ergebnis negativ ist, folgt der Verfahrensschritt V680, und es erfolgt der Aufruf der Methode für den lokalen Adressaten, welcher in diesem Fall das instanzierte lokale Objekt ist.

Bei einem positiven Ergebnis folgt der Verfahrensschritt V640. Für die aufzurufende Methode wird deren Methoden-Identifikation ermittelt.

Es folgt der Verfahrensschritt V641. Es wird der remote Adressat ermittelt, welcher in diesem Fall das remote instanzierte Objekt ist.

Es folgt der Verfahrensschritt V642. Es werden die Parameter für den remoten Aufruf der Methode verpackt.

Es folgt der Verfahrensschritt V670. Es erfolgt eine Interprozeßkommunikation (IPC) zwischen dem Lokal-Prozeß und dem Remote-Prozeß.

Im Remote-Prozeß folgt der Verfahrensschritt V650. Es werden die Parameter für den Aufruf der Methode ausgepackt.

Es folgt der Verfahrensschritt V651. Es wird der lokale Adressat im Remote-Prozeß ermittelt. Dieser ist in diesem Fall das im Remote-Prozeß instanzierte Objekt.

Es folgt der Verfahrensschritt V652. Es erfolgt ein Aufruf der generischen Methode, bei welcher mittels der Methoden-Identifikation die aufzurufende Methode ermittelt wird.

Es folgt der Verfahrensschritt V660. Es erfolgt der Aufruf der Methode für das im Remote-Prozeß instanzierte Objekt.

Mittels der Interprozeßkommunikation des Verfahrensschrittes V670 wird nach dem Remote-Prozeß der Lokal-Prozeß fortgesetzt.

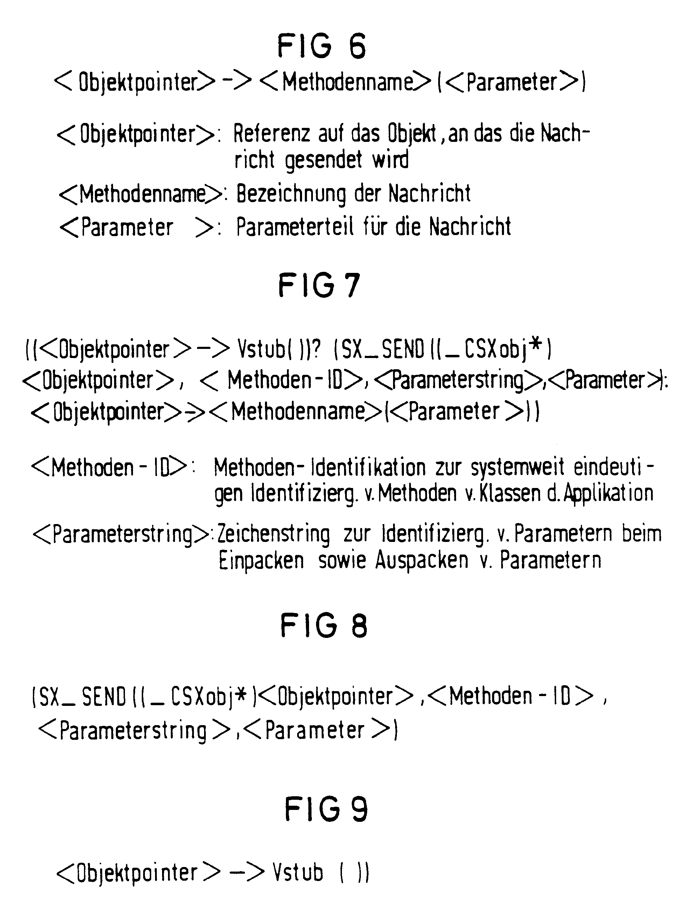

Wie die Figur 6 zeigt, besteht ein Ausführungsbeispiel für einen lokalen Aufruf einer Methode für ein Objekt aus einem Objektpointer, einem Methodennamen, sowie aus Parametern. Der Objektpointer bildet dabei eine Referenz auf das Objekt, an welches eine Nachricht gesendet wird. Der Methodenname bildet dabei eine Bezeichnung für die Nachricht. Die Parameter bilden dabei einen Parameterteil für die Nachricht.

Gemäß vereinbarter Notation gilt beispielsweise folgende Schreibweise:
<Objektpointer>-><Methodenname>(<Parameter>)
- <Objektpointer>:: Referenz auf das Objekt, an das die Nachricht gesendet wird.
- <Methodenname>:: Bezeichnung der Nachricht
- <Parameter>:: Parameterteil für die Nachricht

Beispielsweise bei der Programmiersprache C++ ist deren Nachrichtenmechanismus so ausgelegt, daß nur die Adressierung von Objekten innerhalb eines Betriebssystemprozesses unterstützt wird. Applikationen, welche auf mehrere unabhängige Betriebssystemprozesse verteilt werden sollen, benötigen daher einen erweiterten Nachrichtenmechanismus. Diese Erweiterung des Nachrichtenmechanismus soll nicht durch eine Erweiterung der Programmiersprache erfolgen, da auf diese Weise eine Portabilität eingeschränkt ist. Diese Erweiterung des Nachrichtenmechanismusses soll in einer solchen Weise vorgenommen werden, daß eine Portabilität gewährleistet ist. Zusätzlich zu dem in der Programmiersprache verankerten prozeßlokalen Nachrichtenmechanismus soll noch ein Mechanismus für einen prozeßübergreifenden Nachrichtenaustausch in Form einer Interprozeßkommunikation (IPC) bereitgestellt werden. Dabei sollen keine neuen Sprachmittel benötigt werden, sodaß eine Compilererweiterung nicht erforderlich ist. Von einem Präprozessor soll in einem Aufbereitungsverfahren für die zu compilierenden Sourcen der Applikation ein derartiger Methodenaufruf mittels einer Codesubstitution ersetzt werden durch eine Codesequenz, in welcher zusätzlich implizite Aufrufe für den prozeßübergreifenden Nachrichtenaustausch (IPC) enthalten sind. Mittels dieser Codesequenz soll sowohl der prozeßlokale Nachrichtenaustausch, als auch ein erweiterter Nachrichtenaustausch über Prozeßgrenzen hinweg erlaubt werden.

Wie die Figur 7 zeigt, besteht ein Ausführungsbeispiel für eine derartige Codesequenz aus einem lokalen Aufruf einer Stub-Methode Vstub, sodaß bei einem positiven Ergebnis dieses Aufrufs eine für die Interprozeßkommunikation (IPC) erweiterte Form des Aufrufs vorgesehen ist, sowie daß bei einem negativen Ergebnis ein lokaler Methodenaufruf vorgesehen ist, welcher gleich ist dem in der Figur 6 dargestellten Methodenaufruf, welcher durch die in der Figur 7 dargestellte Codesequenz bei der Codesubstitution ersetzt wird.

Gemäß vereinbarter Notation gilt beispielsweise folgende Schreibweise:
((<Objektpointer>->Vstub())?(SX_SEND((_CSXobj*)
<Objektpointer>,<Methoden-ID>,<Parameterstring>,<Parameter>): (<Objektpointer>-><Methodenname>(<Parameter>))
- <Methoden-ID>:: Methoden-Identifikation zur systemweit eindeutigen Identifizierung von Methoden von Klassen der Applikation
- <Parameterstring>:: Zeichenstring zur Identifizierung von Parametern beim Einpacken sowie Auspacken von Parametern

Dabei dient die Methoden-Identifikation zur systemweit eindeutigen Identifizierung von Methoden für Klassen der Applikation. Es ist ein Parameterstring vorgesehen, welcher in Form eines Zeichensstrings zur Identifizierung von Parametern beim Einpacken sowie Auspacken von Parametern dient.

Wie die Figur 8 zeigt, enthält ein Ausführungsbeispiel einer derart erweiterten Form des Aufrufs für die Interprozeßkommunikation (IPC) einen Aufruf zum prozeßübergreifenden Versenden der Nachricht, einen Objektpointer, eine Methoden-Identifikation, einen Parameterstring, sowie Parameter.

Gemäß vereinbarter Notation gilt beispielsweise folgende Schreibweise:
(SX_SEND((_CSXobj*)<Objektpointer>,<Methoden-ID>,
<Parameterstring>, <Parameter>)

Ob dieser Aufruf tatsächlich aktiviert wird, wird zur Laufzeit entschieden durch eine Auswertung des Ergebnisses, welches als eine Abfrage mittels des Aufrufs der Stub-Methode ermittelt wird.

Wie die Figur 9 zeigt, besteht ein Ausführungsbeispiel für einen Aufruf der Stub-Methode aus einem Objektpointer, sowie aus dem Methodennamen Vstub.

Gemäß vereinbarter Notation gilt beispielsweise folgende Schreibweise:
(<Objektpointer>->Vstub())

Vor dem Versenden der Nachricht gemäß des Methodennamens an das referenzierte Objekt wird jedesmal ermittelt, ob ein prozeßlokaler Methodenaufruf stattfinden soll, oder ob ein mittels der Interprozeßkommunikation (IPC) erweiterter Aufruf durchgeführt wird. Im Falle eines IPC-Aufrufes kommt die Funktion SX-SEND zum Tragen, welche mit den geeigneten Parametern zu versorgen ist. Diese Parameterversorgung soll bei der Codesubstitution automatisiert vom Präprozessor vorgenommen werden.

In einer vorteilhaften Weise erfolgt die Codesubstitution nach einfachen Regeln, sodaß diese automatisierbar ist, und beispielsweise von einem Tool durchgeführt werden kann.

Zusammen mit der Codesubstitution für die Nachrichtenaufrufe sollen auch noch diejenigen Codeteile substituiert werden, welche die Instanzierung von Klassen sowie das Entfernen von Objekten aus dem System betreffen.

Die Entscheidung, welche Form des Nachrichtenmechanismusses jeweils zum Tragen kommt, also ein prozeßlokales Versenden der Nachricht oder ein prozeßübergreifendes Versenden der Nachricht, soll zur Laufzeit des Programmes getroffen werden, und zwar in Abhängigkeit von einer aktuellen Systemkonstellation, welche bei objektorientierten Softwaresystemen dynamisch veränderbar ist. Um eine hohe Performanz zu gewährleisten, soll diese Abfrage sehr schnell von statten gehen und deshalb prozeßlokal erfolgen. In jedem Betriebssystemprozeß soll jeweils eine Instanz existieren, welche darüber Auskunft geben kann, ob sich ein adressiertes Objekt gerade im jeweiligen Betriebssystemprozeß des Nachrichtensenders befindet, oder falls es in einem anderen Betriebssystemprozeß existiert, eine Wegeinformation bereitstellen zur Ermöglichung der Adressierung. Dies soll mittels eines Stub-Konzeptes erfolgen.

Bei einem derartigen Stub-Konzept sollen in einer verteilten Applikation in denjenigen Betriebssystemprozessen, welche nicht selbst ein reales Objket enthalten, Stellvertreter-Objekte, als Stub-Objekte anstelle der realen Objekte vorhanden sein. Diese Stub-Objekte stehen dann im Falle einer Anforderung an das reale Objekt als Ansprechpartner lokal zur Verfügung und können entweder dessen Aufgaben direkt übernehmen oder die geforderte Dienstleistung an das reale Objekt weitervermitteln. Diese Stub-Objekte sollen sich gegenüber den anderen Objekten exakt wie die realen Objekte verhalten.

Eine derartige Aufgabe oder eine mögliche Dienstleistung ist beispielsweise die Auskunft darüber, ob es sich bei einem bestimmten Objekt um die Instanz selbst handelt oder um das Stub-Objekt. Falls es sich dabei um die Instanz selbst handelt, kann die Nachricht in der beispielsweise bei der Programmiersprache C++ üblichen Form direkt an das adressierte Objekt gesendet werden. Anderenfalls soll das Stub-Objekt alle notwendigen Informationen darüber bereitstellen, um die entsprechende Anforderung an das reale Objekt weiterzuleiten. Im Bedarfsfall kann jedes Objekt, einschließlich der Stub-Objekte, darüber Auskunft geben, ob es selbst ein Stub-Objekt ist oder nicht. Zu diesem Zweck wird eine Methode, die Stub-Methode Vstub(), als virtuelle Methode in der Basisklasse aller Applikationsklassen bereitgestellt. Durch den Vererbungsmechanismus erhalten alle Objekte der Applikation automatisch die Fähigkeit, Auskunft darüber zu geben, ob sie Stub-Objekte sind oder reale Objekte. Es wird in der Basisklasse aller Applikationsklassen die Stub-Methode bereitgestellt, welche im Falle einer Aktivierung ein negatives Ergebnis liefert. Die Stub-Methode ist redefinierbar zu deklarieren, indem die Stub-Methode beispielsweise bei der Programmiersprache C++ das Schlüsselwort virtual enthält. Für Stub-Klassen wird die Stub-Methode redefiniert, sodaß sie ein positives Ergebnis liefert. Demnach liefern Stub-Objekte auf die Anfrage Vstub() gemäß der Stub-Methode ein anderes Ergebnis als die nicht-Stub-Objekte, bei welchen eine Default-Implementierung zum Tragen kommt.

Eine Systemkonfiguration, also eine Aufteilung der Objekte auf Betriebssystemprozesse, braucht erst nach dem Übersetzen der Quellprogramme festgelegt werden. Erst zur Laufzeit soll entschieden werden, welcher Nachrichtenmechanismus jeweils zum Tragen kommt. Dies gilt auch für den Vorgang der Instanzierung von Klassen sowie das Entfernen von Objekten aus dem laufenden System. Dies kann nicht statisch vom Compiler erledigt werden, sondern soll vom Laufzeitsystem ausgeführt werden.

Ebenso wie bei der Codesubstitution für die Nachrichtenaufrufe werden auch die Aufrufe NEW und DELETE in der Source vom Präprozessor durch die Funktionen SX_NEWobj als Instanzierungsfunktion und SX_DELETE als Löschfunktion ersetzt. Diese Funktionen werden im Laufzeitsystem ausgeführt. Diese Funktionen werden zu jeder ladbaren Einheit dazugebunden. Sie inkorporieren die Informationen darüber, ob ein Objekt lokal oder remote indistanziert oder gelöscht werden soll. Bei der Instanzierung wird demzufolge entweder der Operator NEW beispielsweise bei der Programmiersprache C++ verwendet, oder es wird über die Interprozeßkommunikation die Instanzierung des Objektes in einem anderen Betriebssystemprozeß angestoßen und lokal wird dabei nur ein Stub-Objekt erzeugt. Die Löschfunktion entscheidet zur Laufzeit, ob das Objekt, auf das sie angewendet wird, ein Stub-Objekt oder ein reales Objket ist. Abhängig davon wird entweder der Operator DELETE beispielsweise bei der Programmiersprache C++ verwendet oder es wird über die Interprozeßkommunikation das Löschen des Objektes in einem anderen Betriebssystemprozeß angestoßen und lokal wird das Stub-Objket gelöscht. Die Implementierung der Instanzierungsfunktion und der Löschfunktion wird aufgrund von Angaben in einer Konfigurationsdatei generiert.

Beim prozeßübergreifenden Kommunikationsmechanismus gehen Methodenaufrufe, also auch Aufrufe von Konstrukturen und Destruktoren, über Prozeßgrenzen hinweg, sodaß diese Aufrufe in versendbare Daten umzuwandeln sind. Dabei werden die Methoden der verwendeten Klassen durch Methoden-Identifikationen identifiziert. Diese Methoden-Identifikationen werden beispielsweise mittels einer Protokoll-Informations-Datei systemweit eindeutig vergeben und mittels der generischen Methode ausgewertet, welche jeoes Objekt besitzt. Die Protokoll-Informations-Datei bildet eine systemweite Datenbasis über Methoden und ihre Methoden-Identifikationen. Diese wird bei jeder Codesubstitution ausgewertet und soweit erforderlich vervollständigt. Die Protokoll-Informations-Partei enthält für jede Methode der Applikation folgende Daten:
- Klassenname
- Methodenname
- Typen der Parameter der Methode (diese Angabe ist notwendig, da beispielsweise in der Programmiersprache C++ Methoden nicht allein aufgrund von KLassennamen und Methodennamen, sondern erst durch die Parametertypen eindeutig identifiziert werden können)
- Parameterstring (beispielsweise verwendet für das Einpacken sowie Auspacken der Parameter)
- Methoden-Identifikation.

Bei der Codesubstitution wird die Definition jeder verwendeten Klasse um die generische Methode erweitert. Diese bildet die Methoden-Identifikationen auf lokale Methodenaufrufe ab. Jeder Methoden-Aufruf aus einem anderen Prozeß führt im Empfängerprozeß zunächst zu einem Aufruf der generischen Methode mit der Methoden-Identifikation als Parameter.

Beim prozeßübergreifenden Versenden der Nachricht werden die Parameter des Methodenaufrufs in einer Datenstruktur verpackt und verschickt. Die Funktionen SX-SEND und die generische Methode sind für das Einpacken sowie Auspacken der Parameter vorgesehen. Dazu werden der Funktion SX-SEND Informationen über Methodenparameter codiert übergeben, beispielsweise in Form eines Strings. Dieser Informationsstring, also der Parameterstring, wird bei der Codesubstitution ebenfalls vom Präprozessor aufbereitet.

Somit wird bei einer objektorientierten Applikation beim Compilieren der Applikation ein Aufbereitungsverfahren, beim Binden ein Konfigurationsverfahren, sowie beim Ablauf ein Kommunikationsverfahren angewendet zum Aufrufen von Methoden für Objekte. Bei einer Änderung einer Systemkonfiguration ist eine Adaption der Sourcen nicht erforderlich. Dies gilt auch bei einer Erweiterung der objektorientierten Applikation.

## Patentansprüche

1. Verfahren zur Verteilung einer objektorientierten Applikation, die in einer Programmiersprache geschrieben ist, deren Nachrichtenmechanismus so ausgelegt ist,daß nur die Adressierung von Objekten innerhalb eines Betriebssystems unterstützt wird auf lokal und entfernt lad- und ausführbare Betriebssystemprozesse,
a) mit einem Aufbereitungsverfahren (V200), bei dem beim Compilieren von einem Präprozessor für die zu compilierenden Sourcen der Applikation mindestens ein Methodenaufruf mittels einer Codesubstitution ersetzt wird durch eine Codesequenz gemäß einem Stub-Konzept, wonach in jedem Betriebssystemprozeß eine Instanz existiert, welche darüber Auskunft geben kann, ob sich ein adressiertes Objekt gerade im jeweiligen Betriebssystemprozeß des Nachrichtensenders befindet, oder falls es in einem anderen Betriebssystemprozeß existiert, eine Wegeinformation bereitstellt zur Ermöglichung der Adressierung, so daß in der verteilten Applikation in denjenigen Betriebssystemprozessen, welche nicht selbst ein reales Objekt enthalten, Stellvertreter-Objekte als Stub-Objekte an Stelle der realen Objekte vorhanden sind,
b) mit einem Konfigurationsverfahren (V400) für zu bindende Module aus compilierten Sourcen der Applikation zur Verteilung von Instanzen der Applikation als Objekte oder Stub-Objekte auf die Betriebssystemprozesse gemäß einer System-Konfiguration, beim Binden der Module,
c) mit einem beim Ablauf vorgesehenen Kommunikationsverfahren (V605) zum Aufrufen von Methoden für Objekte der Applikation, wonach mittels eines lokalen Aufrufs der Stub-Methode entscheidbar ist, ob ein prozeßübergreifendes Versenden einer Nachricht erforderlich ist oder ob der Aufruf lokal abgewickelt werden kann.

2. Verfahren nach Anspruch 1, mit zumindest einem von folgenden Verfahrensschritten des Aufbereitungsverfahrens (V200):
d) es wird eine Klassendeklaration der Sourcen analysiert (V210) für eine Vergabe von Methoden-Identifikationen, sodaß Methoden von verwendeten Klassen der Applikation eindeutig mittels der Methoden-Identifikation identifizierbar sind,
e) es werden die Klassen der Applikation mit einer generischen Methode ergänzt (V230), mittels welcher jene Methode beim Ablauf lokal aufrufbar ist, welche durch einen Parameter der generischen Methode in Form der Methoden-Identifikation identifiziert wird,
f) es werden Basisklassen der Applikation um eine redifinierbar deklarierte Stub-Methode ergänzt (V235),
g) es wird jeder von bei einem Ablauf vorgesehenen Aufrufen von einer Methode für ein Objekt der Klassen ersetzt (V240) durch einen beim Ablauf vorgesehenen Aufruf der Stub-Methode für das Objekt,
- sodaß bei einem positiven Ergebnis des Aufrufs der Stub-Methode für das Objekt beim Ablauf ein Aufruf vorgesehen ist zu einem prozeßübergreifenden Versenden von einer Nachricht, durch welche in einem Remote-Prozeß der Aufruf der Methode des Objektes veranlaßt wird, indem die Methoden-Identifikation in der Nachricht enthalten ist,
- sowie daß bei einem negativen Ergebnis des Aufrufs der Stub-Methode für das Objekt beim Ablauf im Lokal-Prozeß der Aufruf der Methode des Objektes erfolgt,
h) es werden Hilfsdefinitionen für Methoden generiert (250), sodaß zu jeder Methode der Applikation zumindest
- ihr Klassenname,
- ihr Methodenname,
- ihre Parametertypen,
- ihr Parameterstring für ein Einpacken sowie Auspacken von Parametern, sowie
- ihre Methoden-Identifikation definiert sind.

3. Verfahren nach Anspruch 2 mit zumindest einem von folgenden Verfahrensschritten des Konfigurationsverfahrens (V400):
k) es wird eine bestimmte Systemkonfiguration der Applikation analysiert (V410) zur Verteilung der Objekte als die Instanzen der Applikation auf die Betriebssystemprozesse der Applikation,
m) es wird eine generische Instanzierungsfunktion generiert (V420), mittels welcher beim Ablauf ein neues Objekt der Applikation instanzierbar ist,
- mit einer lokalen Instanzierung im Lokal-Prozeß bei einem gemäß der Systemkonfiguration lokal zu instanzierenden Objekt, sodaß das negative Ergebnis beim Aufruf der Stub-Methode im Lokal-Prozeß für dieses lokal-instanzierte Objekt vorgesehen ist,
- sowie mit einer remoten Instanzierung bei einem gemäß der Systemkonfiguration remote zu instanzierenden Objekt, indem im Lokal-Prozeß ein prozeßübergreifender Anstoß vorgesehen ist zur Instanzierung dieses remote zu instanzierenden Objektes im Remote-Prozeß, sowie mit einer lokalen Instanzierung für ein zu diesem Objekt vorgesehenes lokales Stub-Objekt, dessen Stub-Methode im Lokal-Prozeß redefiniert wird, sodaß das positive Ergebnis beim Aufruf der Stub-Methode für dieses als Stub-Objekt lokal instanzierte Objekt im Lokal-Prozeß vorgesehen ist,
n) es wird eine generische Löschfunktion generiert (V430), mittels welcher beim Ablauf die Instanzierung von einem der Objekte der Applikation löschbar ist,
- mit einem lokalen Löschen im Lokal-Prozeß bei einem gemäß der Systemkonfiguration lokal-instanzierten Objekt,
- sowie mit einem remoten Löschen bei einem gemäß der Systemkonfiguration remote instanzierten Objekt, indem im Lokal-Prozeß ein prozeßübergreifender Anstoß vorgesehen ist zum Löschen dieses remote-instanzierten Objektes im Remote-Prozeß, sowie ein lokales Löschen von dem zu diesem Objekt vorgesehenen lokalen Stub-Objekt,
p) es werden Runfiles erzeugt (V450), indem zu den Modulen bei jeder ladbaren Einheit Module
- für die Instanzierungsfunktion,
- für die Löschfunktion, sowie
- für die Hilfsdefinitionen für die Methoden der Applikation dazugebunden werden.

4. Verfahren nach Anspruch 3 mit zumindest einem von folgenden Verfahrensschritten des Kommunikationsverfahrens (V605):
r) es wird die Stub-Methode für eines der Objekte lokal aufgerufen (V620), sowie im Falle des negativen Ergebnisses erfolgt ein lokaler Methodenaufruf für das Objekt (V680),
s) es wird im Falle des positiven Ergebnisses für den lokalen Aufruf der Stub-Methode für das Objekt, aus den gebundenen Hilfsdefinitionen
- die Methoden-Identifikation (V640),
- das remote-instanzierte Objekt (V641), sowie
- Methodenparameter ermittelt,
t) es wird anhand des Parameterstrings eine Nachricht verpackt im Lokal-Prozeß (V642),
u) es wird die Nachricht im Remote-Prozeß empfangen (V670),
v) es wird im Remote-Prozeß nach dem Auspacken der Parameter (V650) das lokal instanzierte Objekt ermittelt (V651),
w) es wird mittels der generischen Methode anhand der Methoden-Identifikation (V652) der Aufruf der dadurch identifizierten Methode ausgeführt (V660).

## Claims

1. Process for adapting an object-oriented application, which is written in a programming language whose communication mechanism is designed in such a way that only the addressing of objects within one operating system is supported, over operating system processes that can be located and executed locally and remotely,
a) with a preparation process (V200) in which, for the sources of the application to be compiled, at least one method call is replaced by a code sequence by means of code substitution by a preprocessor during compilation in accordance with a stub concept, according to which an instance exists in every operating system process which can provide information as to whether an addressed object is currently located in the respective operating system process of the message sender, or, if it exists in another operating system process, provides route information to enable addressing, so that representative objects are present as stub objects instead of the real objects in the distributed application in operating system processes which do not themselves contain a real object,
b) with a configuration process (V400) for modules to be linked from compiled sources of the application for distributing instances of the application as objects or stub objects over the operating system processes in accordance with a system configuration when link-editing the modules,
c) with a communication process (V605) provided during execution for calling up methods for objects of the application, according to which it is possible to decide with the aid of a local call of the stub method whether trans-process sending of a message is required or whether the call can be handled locally.

2. Process according to Claim 1, with at least one of the following process steps of the preparation process (V200):
d) a class declaration of the sources is analysed (V210) for allocating method identifications so that methods of used classes of the application can be clearly identified by means of the method identification,
e) the classes of the application are extended with a generic method (V230), by means of which the particular method identified by a parameter of the generic method in the form of the method identification can be called up locally during execution,
f) base classes of the application are extended by a redefinably declared stub method (V235),
g) each of the calls of a method for an object of the classes provided during execution is replaced (V240) by a call of the stub method for the object provided during execution,
- so that in the case of a positive result of the call of the stub method for the object during execution, a call is provided for trans-process sending of a message, by means of which the call of the method of the object is initiated in a remote process, in that the message contains the method identification,
- and also that the method of the object is called up in the case of a negative result of the call of the stub method for the object during execution in the local process,
h) auxiliary definitions for methods are generated (250) so that there are defined for each method of the application at least
- its class name,
- its method name,
- its parameter types,
- its parameter string for packing and unpacking parameters, and also
- its method identification.

3. Process according to Claim 2 with at least one of the following process steps of the configuration process (V400):
k) a particular system configuration of the application is analysed (V410) for distributing the objects as the instances of the application over the operating system processes of the application,
m) a generic instantiation function is generated (V420) by means of which a new object of the application can be instantiated during execution,
- with a local instantiation in the local process in the case of an object to be instantiated locally in accordance with the system configuration, so that the negative result is provided for said locally instantiated object when the stub method is called up in the local process,
- and also with a remote instantiation in the case of an object to be instantiated remotely in accordance with the system configuration, in that a trans-process trigger is provided in the local process for instantiating said object to be instantiated remotely in the remote process, and also with a local instantiation for a local stub object provided for this object, the stub method of which is redefined in the local process, so that when the stub method is called up the positive result is provided in the local process for this object locally instantiated as stub object,
n) a generic delete function is generated (V430), by means of which the instantiation can be deleted by one of the objects of the application during execution,
- with a local deletion in the local process for a locally instantiated object in accordance with the system configuration,
- and also with a remote deletion for a remotely instantiated object in accordance with the system configuration, in that a trans-process trigger is provided in the local process for deleting said remotely instantiated object in the remote process, as well as a local deletion of the local stub object provided for said object,
p) runfiles are generated (V450), in that modules
- for the instantiation function,
- for the delete function, and also
- for the auxiliary definitions for the methods of the application are linked to the modules for each loadable unit.

4. Process according to Claim 3 with at least one of the following process steps of the communication process (V605):
r) the stub method for one of the objects is called up locally (V620), and also a local method call for the object (V680) is made in the case of a negative result,
s) in the case of a positive result for the local call of the stub method for the object
- the method identification (V640),
- the remotely instantiated object (V641), and also
- method parameters are determined from the linked auxiliary definitions,
t) a message is packed in the local process (V642) on the basis of the parameter string,
u) the message is received in the remote process (V670),
v) the locally instantiated object is determined (V651) in the remote process after unpacking the parameters (V650),
w) the call of the method thereby identified is executed (V660) by means of the generic method on the basis of the method identification (V652).

## Revendications

1. Procédé pour distribuer une application orientée objet, qui est écrite dans un langage de programmation et dont le mécanisme de transmission d'informations est conçu de telle sorte que seul l'adressage d'objets à l'intérieur d'un système d'exploitation et assisté pour des processus du système d'exploitation devant être chargés et exécutés localement et à distance,
a) avec un procédé de préparation (V200), selon lequel au moins un appel de méthode est effectué par d'une substitution de code lors de la compilation par un préprocesseur pour les sources devant être compilées de l'application, par une séquence de codes conformément à un "concept stub" (c'est-à-dire un concept de remplacement), selon lequel, lors de chaque processus du système d'exploitation, il existe une instance qui peut indiquer si un objet adressé est situé précisément dans le processus respectif du système d'exploitation de l'émetteur d'informations ou, dans le cas où cela existe dans un autre processus du système d'exploitation, prépare l'information d'acheminement pour permettre l'adressage de sorte que dans l'application distribuée, des objets représentatifs sont présents en tant que "objets stub", (c'est-à-dire des objets de remplacement) à la place des objets réels, dans l'application distribuée à l'intérieur des processus du système d'exploitation, qui ne contiennent pas eux-mêmes un objet réel,
b) avec un procédé de configuration (V400) pour des modules devant être reliés, à partir de sources compilées de l'application pour la distribution d'instances de l'application en tant qu'objets ou objets de remplacement aux processus du système d'exploitation conformément à la configuration de systèmes, lors du chaînage des modules,
c) avec un procédé de communication (V605) prévu lors de l'exécution pour appeler des méthodes pour des objets de l'application, selon lequel une décision peut être prise au moyen d'un appel local de la méthode de remplacement pour déterminer si une émission, allant au-delà du processus, d'une information est nécessaire ou si l'appel peut se dérouler localement.

2. Procédé suivant la revendication 1, comportant au moins l'une des étapes opératoires suivantes du procédé de préparation (V200) :
d) une déclaration de classes des sources est analysée (V210) pour une délivrance d'identifications de méthodes, de sorte que des méthodes de classes utilisées de l'application peuvent être identifiées de façon nette au moyen de l'identification de méthodes,
e) des classes de l'application sont complétées (V203) par une méthode générique, au moyen de laquelle peut être appelée localement, lors de l'exécution, la méthode, qui est identifiée par un paramètre de la méthode générique sous la forme de l'identification de la méthode,
f) des classes de base de l'application sont complétées (V235) d'une méthode de remplacement, déclarée d'une manière pouvant être redéfinie,
g) chacun des appels prévus lors de l'exécution est remplacé (V240), au moyen d'une méthode pour un objet des classes, par un appel, prévu lors de l'exécution, de la méthode de remplacement pour l'objet,
- de sorte que, dans le cas d'un résultat positif de la méthode de remplacement pour l'objet, lors de l'exécution, il est prévu un appel pour une émission, allant au-delà du processus, d'une information, au moyen de laquelle l'appel de la méthode de l'objet est déclenché dans un processus à distance, par le fait que l'identification de la méthode est contenue dans l'information,
- ainsi que, dans le cas d'un résultat négatif de l'appel de la méthode de remplacement pour l'objet l'appel de la méthode de l'objet s'effectue lors de l'exécution dans le processus local,
h) des définitions auxiliaires pour des méthodes sont produites (250), de sorte que pour chaque méthode de l'application sont définis au moins
- son nom de classe,
- son nom de méthode,
- ses types de paramètres,
- sa chaîne de paramètres pour un assemblage et un désassemblage de paramètres, et
- son identification de méthode.

3. Procédé suivant la revendication 2, comportant au moins l'une des étapes opératoires suivantes du procédé de configuration (V400) :
k) une configuration de système déterminée de l'application est analysée (V410) pour la distribution des objets sous la forme des instances de l'application, aux processus du système d'exploitation de l'application,
m) une fonction générique instanciée est produite (V420), fonction au moyen de laquelle un nouvel objet de l'application peut être instancié lors de l'exécution,
- avec une instanciation locale lors du processus local dans un objet devant être instancié localement en fonction de la configuration du système, de sorte que le résultat négatif est prévu lors du procédé de remplacement dans le processus local pour cet objet instancié localement,
- ainsi qu'avec une instanciation à distance, dans le cas d'un objet devant être instancié à distance conformément à la configuration de système, par le fait que dans le processus local, une incitation allant au-delà du processus est prévue pour instancier cet objet devant être instancié à distance, dans le processus à distance, ainsi qu'une instanciation locale pour un objet de remplacement local prévu pour cet objet et dont la méthode de remplacement est redéfinie dans le processus local, de sorte que le résultat positif est prévu, lors de l'appel de la méthode de remplacement pour cet objet instancié localement en tant qu'objet de remplacement, dans le processus local,
n) une fonction générique d'effacement est produite (V430), au moyen de laquelle, lors de l'exécution, l'instanciation peut être effacée par un objet de l'application,
- avec un effacement local d'un processus local pour un objet instancié localement conformément à la configuration du système,
- ainsi qu'avec un effacement à distance pour un objet instancié à distance conformément à la configuration du système, par le fait que dans le processus local, une incitation allant au-delà du processus est prévue dans le processus local pour l'effacement de cet objet instancié à distance, dans le processus à distance, ainsi qu'un effacement local de l'objet local de remplacement, prévu pour cet objet,
p) des fichiers d'exécution sont produits (V405) par le fait qu'aux modules sont chaînés, pour chaque unité pouvant être chargée, des modules,
- pour la fonction d'instanciation,
- pour la fonction d'effacement, et
- pour les définitions auxiliaires pour les méthodes de l'application.

4. Procédé suivant la revendication 3, comportant au moins l'une des étapes opératoires suivantes du procédé de communication (V605) :
r) la méthode de remplacement est appelée localement (V6) pour l'un des objets, et, dans le cas du résultat négatif, un appel local de la méthode est effectué pour l'objet (V680),
s) dans le cas du résultat positif, pour l'appel local de la méthode de remplacement pour l'objet sont déterminées, à partir des définitions auxiliaires chaînées,
- l'identification de la méthode (V640),
- l'objet instancié à distance (V641), et
- des paramètres des méthodes,
t) une information est insérée dans le processus local (V642) sur la base de la suite de paramètres,
u) l'information dans le processus à distance est reçue (V670),
v) dans le processus à distance, l'objet instancié localement (V650) est déterminé après le déstockage des paramètres (V605) dans le processus à distance,
w) au moyen de la méthode générique et sur la base de l'identification des méthodes (V652) est exécuté (V660) l'appel de la méthode identifiée de cette manière.
